# EUROPEAN PATENT APPLICATION

(11) **EP 2 916 609 A1**
(43) Date of publication of application: **09.09.2015**
(21) Application number: 13862862.3
(22) Date of filing: 22.02.2013
(51) Int. Cl.: H04W 72/04

(54) **METHOD FOR SENDING A PILOT SIGNAL AND NETWORK SIDE DEVICE**

(30) Priority: 14.12.2012 WO PCT/CN2012/086677
(71) Applicant: Huawei Technologies Co., Ltd., Longgang District Shenzhen, Guangdong 518129 (CN)
(72) Inventor: ZHAO, Yueying, Shenzhen Guangdong 518129 (CN); WANG, Zongjie, Shenzhen Guangdong 518129 (CN); MA, Xueli, Shenzhen Guangdong 518129 (CN)
(74) Representative: Goddar, Heinz J.
(86) International application number: PCT/CN2013/071801
(87) International publication number: WO 2014/089936

(57) **Abstract**

A pilot signal sending method and a related network side device are disclosed. The method includes: sending a first pilot signal to a user equipment when it is detected that data needs to be sent on a data channel, where the first pilot signal is used by the user equipment to demodulate data sent by a network side device.

## Description

This application claims priority to International Patent Application No. PCT/CN2012/086677, filed with the Chinese Patent Office on December 14, 2012 and entitled "PILOT SIGNAL SENDING METHOD AND NETWORK SIDE DEVICE", which is incorporated herein by reference in its entirety.

### TECHNICAL FIELD

The present invention relates to the communications field and in particular, to a pilot signal sending method and a network side device.

### BACKGROUND

According to a technology of integration of a Global System for Mobile Communications (GSM, Global System for Mobile Communications) to an Universal Mobile Telecommunications System (UMTS, Universal Mobile Telecommunications System), some narrowband frequency spectra (<5 MHz) in the GSM cannot be fully utilized, and therefore application of GSM frequency spectra in the UMTS is affected, and efficiency of usable frequency spectra is reduced. In some countries, some frequency spectra that are less than 5 MHz and cannot be allocated exist at both ends of an UMTS frequency band, and if these frequency spectra are not utilized, a huge waste of frequency spectra is caused. In this case, a narrowband UMTS (referred to as S_UMTS) draws wide attention.

A core idea of the S_UMTS is to use an UMTS technology on a bandwidth less than 5 MHz. The technology is implemented by lowering clock frequency in an existing UMTS, while a technology of a baseband part remains unchanged. Therefore, the S_UMTS is a technology that affects a system less. Definitely, because of reduction in an air interface chip rate, a transmission rate of the S_UMTS is reduced accordingly. However, in an existing UMTS multi-carrier system, each carrier needs to send a common pilot channel (CPICH, Common Pilot Channel), which occupies a code resource of the S_UMTS, thereby reducing an effective utilization rate of code resources.

In addition, in a conventional heterogeneous network (Hetnet, Heterogeneous Networks) networking manner, a macro network and a micro network are both an independent cell, and similarly, a CPICH also needs to be sent in each cell. A soft cell (soft cell) includes concepts of a cell and a transmission point. Each transmission port may transmit a different pilot channel because each transmission port has a different function. According to the existing networking manner, if each transmission port sends a CPICH, operational efficiency of the soft cell is reduced, and interference between transmission points is great.

In the prior art, a network side device sends a downlink CPICH, which is used for channel quality indicator (CQI, Channel Quality Indicator) measurement, and is further used for data demodulation. To ensure demodulation precision, great transmit power of the CPICH needs to be ensured, which causes a large waste of power and also causes great interference to a neighboring cell.

### SUMMARY

Embodiments of the present invention provide a pilot signal sending method and a network side device, which are used for improving effective utilization of a pilot signal and reducing a power overhead for sending the pilot signal.

A first aspect of an embodiment of the present invention provides a pilot signal sending method, including:
sending a first pilot signal to a user equipment when it is detected that data needs to be sent on a data channel, where the first pilot signal is used by the user equipment to demodulate data sent by a network side device.

In a first possible implementation method of the first aspect, the method includes sending a second pilot signal to the user equipment, where the second pilot signal is used for channel status measurement.

With reference to the first possible implementation method of the first aspect, in a second possible implementation method, the sending a first pilot signal to a user equipment includes:
sending the first pilot signal to the user equipment by using first power, where the first power meets a functional requirement on data demodulation; and
the sending a second pilot signal to the user equipment includes:
   sending the second pilot signal to the user equipment by using second power, where the second power is lower than the first power.

With reference to the second possible implementation method of the first aspect, in a third possible implementation method, the second pilot signal is further used for mobility measurement of the user equipment.

With reference to the second possible implementation method of the first aspect, in a fourth possible implementation method, the sending the second pilot signal to the user equipment by using second power includes:
sending the second pilot signal to the user equipment every preset duration by using the second power.

With reference to the first aspect and the first to the fourth possible implementation methods of the first aspect, in a fifth possible implementation method, when data on the data channel is sent in a multi-antenna manner, the sending a first pilot signal to the user equipment includes:
sending the first pilot signal to the user equipment in a code division multiplexing manner; or
sending the first pilot signal to the user equipment in a time division multiplexing manner.

With reference to the fifth possible implementation method of the first aspect, in a sixth possible implementation method, when the sending a first pilot signal to a user equipment is sending the first pilot signal to the user equipment in a time division multiplexing manner, the sending the first pilot signal to the user equipment in a time division multiplexing manner includes:
sending, in a fixed time period within a transmit timeslot, the first pilot signal corresponding to the transmit timeslot to the user equipment, where duration of the fixed time period is shorter than that of the transmit timeslot.

With reference to the first aspect and the first to the fourth possible implementation methods of the first aspect, in a seventh possible implementation method, the sending a first pilot signal to a user equipment includes:
sending, on a dedicated pilot channel, the first pilot signal to the user equipment; or
sending, on a data channel, the first pilot signal to the user equipment.

With reference to the seventh possible implementation method of the first aspect, in an eighth possible implementation method, when the sending a first pilot signal to a user equipment is sending, on a data channel, the first pilot signal to the user equipment on the data channel, the sending, on the data channel, the first pilot signal to the user equipment includes:
sending, in a fixed time period within a transmit timeslot of the data channel, the first pilot signal corresponding to the transmit timeslot to the user equipment, where duration of the fixed time period is shorter than that of the transmit timeslot.

With reference to the possible implementation method of the first aspect, in a ninth possible implementation method, before the sending a first pilot signal to a user equipment, the method includes:
when it is detected that data on the data channel is sent in a multi-antenna manner, skipping performing precoding weighting on the first pilot signal.

A second aspect of the present invention provides a network side device, including:
a detecting unit, configured to detect whether data needs to be sent on a data channel; and
a first sending unit, configured to send a first pilot signal to the user equipment when it is detected that data needs to be sent on the data channel, where the first pilot signal is used by the user equipment to demodulate data sent by the network side device.

With reference to the possible implementation method of the second aspect, in a first possible implementation method, the network side device further includes:
a second sending unit, configured to send a second pilot signal to the user equipment, where the second pilot signal is used for channel status measurement.

With reference to the first possible implementation method of the second aspect, in a second possible implementation method, the first sending unit is further configured to send the first pilot signal to the user equipment by using first power, where the first power meets a functional requirement on data demodulation; and
the second sending unit is further configured to send the second pilot signal to the user equipment by using second power, where the second power is lower than the first power.

With reference to the first possible implementation method of the second aspect, in a third possible implementation method, the first sending unit includes: a first sending module, configured to send the first pilot signal to the user equipment in a code division multiplexing manner; and a second sending module, configured to send the first pilot signal to the user equipment in a time division multiplexing manner.

With reference to the first possible implementation method of the second aspect, in a fourth possible implementation method, the first sending unit includes: a third sending module, configured to send, on a dedicated pilot channel, the first pilot signal to the user equipment; and a fourth sending module, configured to send, on a data channel, the first pilot signal to the user equipment.

A third aspect of the present invention provides a network side device, including:
an input apparatus, an output apparatus, a memory, and a processor; where
the processor executes the following steps:
   send a first pilot signal to a user equipment when it is detected that data needs to be sent on a data channel, where the first pilot signal is used by the user equipment to demodulate data sent by the network side device.

It can be seen from the foregoing technical solutions that the embodiments of the present invention have the following advantages:

Only when data needs to be transmitted between the network side device and the user equipment, the pilot signal is required to perform data demodulation, and therefore, in the embodiments of the present invention, the data channel between the network side device and the user equipment is detected. Only when it is detected that data needs to be sent, the first pilot signal that is capable of meeting data demodulation is sent, so that a power overhead is saved when no data needs to be sent.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a pilot signal sending method according to the present invention;
FIG. 2 is another schematic flowchart of a pilot signal sending method according to the present invention;
FIG. 3 is a schematic pilot signal transmit timeslot diagram of a pilot signal sending method according to the present invention;
FIG. 4 is another schematic flowchart of a pilot signal sending method according to the present invention;
FIG 5 is another schematic pilot signal transmit timeslot diagram of a pilot signal sending method according to the present invention;
FIG. 6 is another schematic pilot signal transmit timeslot diagram of a pilot signal sending method according to the present invention;
FIG. 7 is a schematic structural diagram of a network side device according to the present invention; and
FIG. 8 is a schematic structural diagram of a computer device according to the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

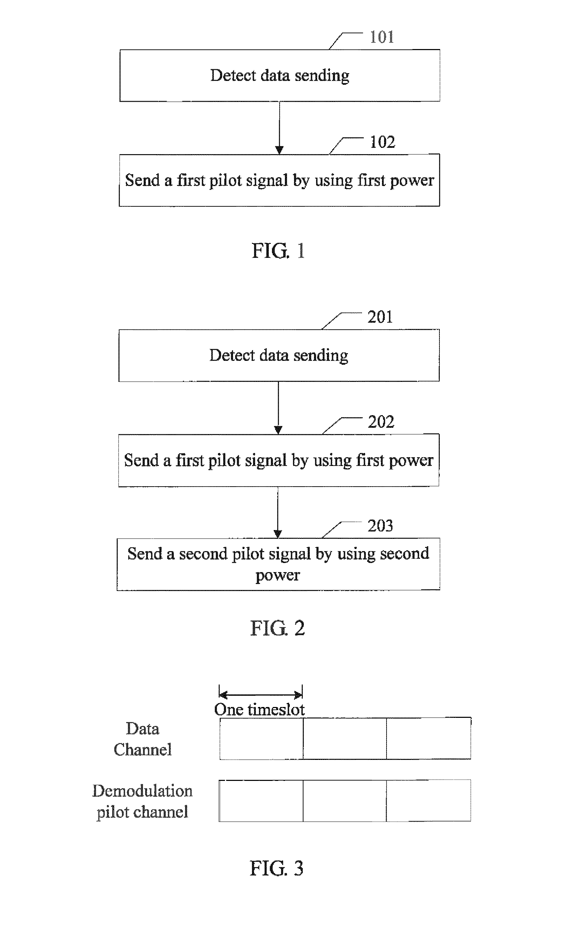

Referring to FIG 1, an embodiment of a pilot signal sending method in an embodiment of the present invention includes:
101: Detect whether data needs to be sent on a data channel.

A network side device detects whether data needs to be sent on the data channel, and if yes, step 102 is executed. Specifically, when the network side device receives an instruction of sending data to a user equipment (User Equipment, UE), it can be determined that data needs to be sent on the data channel.

102: Send a first pilot signal to a user equipment.

The network side device sends the first pilot signal to the user equipment, where the first pilot signal is used by the user equipment to demodulate data sent by the network side device.

Optionally, the first pilot signal may be sent by using first power, where a range of the first power may be -16 dB to -10 dB.

In this embodiment of the present invention, the network side device may be a base station. This embodiment of the present invention achieves significant effect in a narrowband communications system (for example, S_UMTS) or a Hetnet system.

In the prior art, a network side device sends a downlink CPICH, which is used for channel quality indicator CQI measurement, and is further used for data demodulation. To ensure demodulation precision, great transmit power of the CPICH needs to be ensured, which causes a large waste of power and also causes great interference to a neighboring cell.

Only when data needs to be transmitted between the network side device and the user equipment, the pilot signal is required to perform data demodulation, and therefore, in this embodiment of the present invention, the data channel between the network side device and the user equipment is detected. Only when it is detected that data needs to be sent, the first pilot signal that is capable of meeting data demodulation is sent, so that a power overhead is saved when no data needs to be sent.

In a practical application, a downstream user equipment further needs to use a pilot signal to perform some channel status measurement, so as to maintain a regular data transmission channel between a network side device and the user equipment. Referring to FIG. 2, another embodiment of a pilot signal sending method in an embodiment of the present invention includes:
201: Detect data sending.

A network side device detects whether data needs to be sent on a data channel, and if yes, step 202 is executed; and if no, a first pilot signal is not sent.

202: Send a first pilot signal to a user equipment by using first power.

The network side device sends the first pilot signal to the user equipment by using the first power, where the first power meets a functional requirement on data demodulation.

When it is detected that data is sent in a single antenna manner, precoding weighting is not performed on the first pilot signal, and the first pilot signal uses code division multiplexing as a physical channel uses in the prior art (as shown in FIG. 3). The number of sent first pilot signals is consistent with the number of antennas that send the data.

When it is detected that data is sent in a multi-antenna manner, precoding weighting is performed on the first pilot signal, and performing the precoding weighting on the first pilot signal may help the downstream user equipment measure a signal to noise ratio gain. Specifically, the first pilot signal is sent for each sent data stream, that is, the number of sent first pilot signals is the same as the number of data streams. The data streams are two data sources on which orthogonal multiplexing is performed by means of the precoding weighting, where a data stream is corresponding to a data block. Optionally, different first pilot signals may be sent on a dedicated first pilot channel in a code division multiplexing manner by using the first power. Refer to FIG. 3, in which a box represents a timeslot. Using the code division multiplexing manner may ensure data continuity, and improve measurement precision.

Optionally, when it is detected that data is sent in the multi-antenna manner, the precoding weighting may not be performed on the first pilot signal, so that an overhead used by the network side device to process a pilot signal is saved. When the precoding weighting is not performed, the number of sent first pilot signals is consistent with the number of antennas that send the data.

203: Send a second pilot signal to the user equipment by using second power.

The network side device sends the second pilot signal to the user equipment by using the second power, where the second pilot signal is used for channel status measurement. The second power is lower than the first power, and the second power meets a functional requirement on channel status measurement performed by the user equipment.

Specifically, the channel status measurement may include CQI measurement and/or precoding control indicator (PCI, Precoding Control Indication) measurement.

Optionally, for a transmit manner of the second pilot signal, refer to an existing CPICH. The second pilot signal is a pre-designed bit sequence; a new orthogonal variable spreading factor (OVSF, Orthogonal Variable Spreading Factor) is used to perform spectrum spreading, the spreading factor may be SF256, SF128 or SF64; or an orthogonal signature sequence is used for sending. The number of sent second pilot signals is the same as the number of antennas. For example, if sending is performed in the single antenna manner, only one second pilot signal is sent, and if sending is performed in the multi-antenna manner, a number of second pilot signals are sent, where the number is the same as the number of transmit antennas.

Optionally, a range of the second power may be -25 dB to -10 dB.

Optionally, when the network side device has multiple ports (port/beam), each of the ports may be configured to send the first pilot signal and the second pilot signal.

A port refers to a unit on a network, where the unit sends a data channel. A cell may have one or multiple ports. Each port may transmit data to one or multiple users. Each user may receive data from one or multiple ports.

After receiving the second pilot signal, the downstream user equipment uses the second pilot signal for the channel status measurement.

The second pilot signal is used to measure a channel status to maintain a regular data transmission channel between the network side device and the user equipment. Therefore, the second pilot signal may be sent continuously; optionally, in a scenario in which a signal environment is stable, the second pilot signal may be sent periodically, that is, the second pilot signal is sent every preset duration by using the second power.

Optionally, the second pilot signal is further used for mobility measurement, where the mobility measurement is a process of determining that a UE establishes wireless connections to multiple cells at the same time. Specifically, the UE performs signal to noise ratio measurement on the second pilot signal, and reports to a radio network controller (RNC, Radio Network Controller). The RNC determines, according to a signal to noise ratio condition of each cell link, which cells may simultaneously maintain connections to the UE, that is, may simultaneously send data to the UE.

Optionally, the second pilot signal is sent continuously or periodically. Therefore, the forgoing steps 203 and 202 have no timing relationship, that is, step 202 may be executed first, or step 203 may be executed first, which is determined according to a specific situation, and is not limited herein.

In this embodiment of the present invention, pilot signals are classified into first pilot signals having higher transmit power and second pilot signals having lower transmit power; and the first pilot signal is used for data demodulation, and the second pilot signal is used for channel status measurement and mobility measurement, thereby improving effective utilization of the pilot signal.

In this embodiment of the present invention, the second pilot signal used for the channel status measurement is sent independently by using second power (lower than first power), so that a power overhead of pilot signal sending is further reduced.

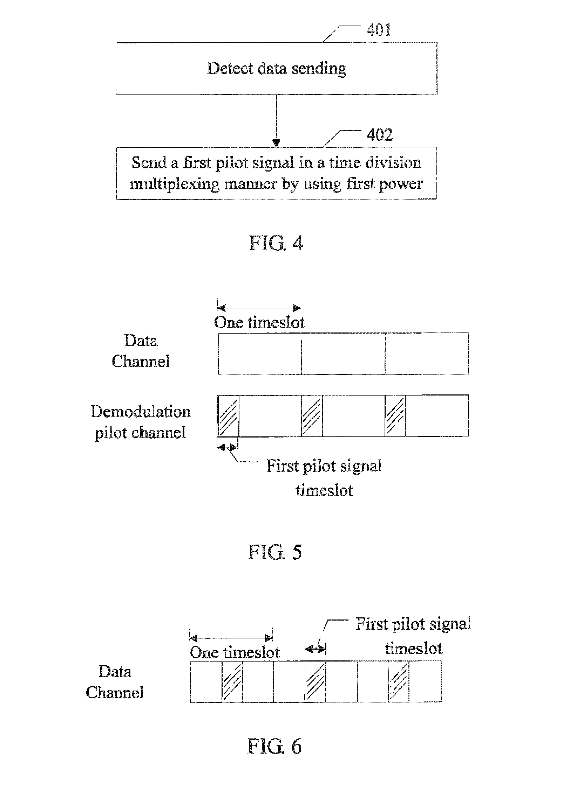

An embodiment of the present invention further provides another solution for improving network side resource utilization. Referring to FIG. 4, another embodiment of a pilot signal sending method in an embodiment of the present invention includes:
401: Detect data sending.

A network side device detects whether data needs to be sent on a data channel, and if yes, step 402 is executed. Specifically, when the network side receives an instruction of sending data to a user, it can be determined that data needs to be sent on the data channel.

402: Send a first pilot signal in a time division multiplexing manner by using first power.

The network side device sends different first pilot signals in the time division multiplexing manner by using the first power.

Specifically, when data is sent in a multi-antenna manner, the network side device sends, in a fixed time period within a transmit timeslot, the first pilot signal corresponding to the transmit timeslot by using the first power, where duration of the fixed time period is shorter than that of the transmit timeslot. Refer to FIG. 5 for a schematic sending diagram. For example, one transmit timeslot is 0.5 seconds, the fixed time period may be set as first 0.1 seconds of the timeslot, and the network side device sends, within the first 0.1 seconds, a first pilot signal corresponding to the timeslot; different first pilot signals may be sent in different intervals in a same timeslot, for example, a first pilot signal of a first user is sent within first 0.1 seconds of a transmit timeslot, and a first pilot signal of a second user is sent within second 0.1 seconds of the same timeslot; and as shown in FIG. 5, "first pilot signal timeslot" indicated by shaded parts indicates first pilot signals sent to a same user. A downstream user equipment distinguishes different first pilot signals by performing reception within different intervals. When data transmission is performed on a network side, available orthogonal code resources are limited, and using time division multiplexing may save the orthogonal code resources.

Optionally, to further save a network side resource, the network side device may further send, on a data channel, a the first pilot signal by using the first power (applicable to a situation in which data is sent in a single antenna manner or in a multi-antenna manner).

Specifically, the first pilot signal is added on the data channel, and uses a same transmit manner as data. If the data is sent in a single antenna manner, the pilot is sent in the single antenna manner, and precoding weighting is not performed. If the data is sent in a multi-antenna manner, the pilot is sent in the multi-antenna manner, and precoding weighting is performed. The number of sent first pilot signals is the same as the number of data streams. The network side device sends, in a fixed time period within a transmit timeslot of the data channel, the first pilot signal corresponding to the transmit timeslot by using the first power, where duration of the fixed time period is shorter than that of the transmit timeslot. Referring to FIG. 6 for a schematic sending diagram, when the network side sends a data signal, the first pilot signal may be sent by being added in a fixed time period in the transmit timeslot of the data channel.

The forgoing embodiments of the present invention may be used in a GSM, a UMTS, a narrowband communications system (for example, S_UMTS), a Hetnet or another type of communications system, and no details are repeated herein.

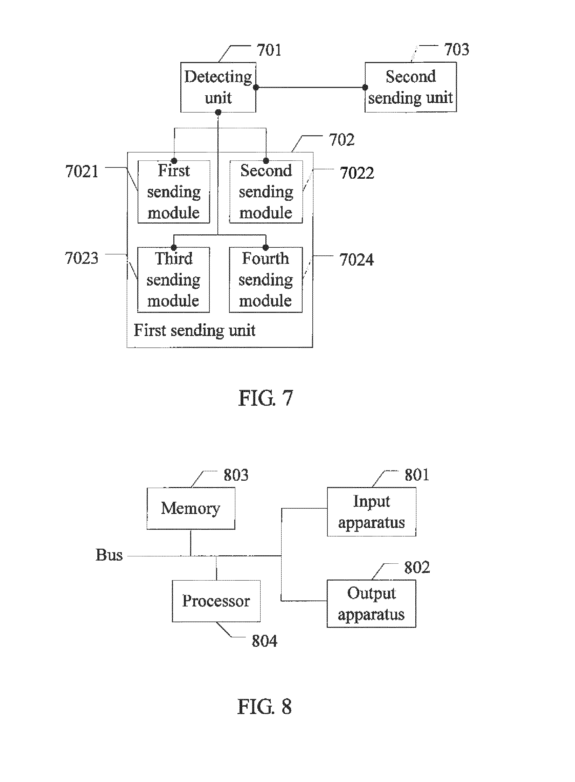

The following describes an embodiment of a network side device of the present invention configured to execute the foregoing pilot signal sending method, and for a logical structure of this embodiment, refer to FIG. 7. An embodiment of a network side device in this embodiment of the present invention includes:
a detecting unit 701, configured to detect whether data needs to be sent on a data channel; and
a first sending unit 702, configured to send a first pilot signal to a user equipment when it is detected that data needs to be sent on the data channel, where the first pilot signal is used by the user equipment to demodulate data sent by the network side.

Only when data needs to be transmitted between the network side device and the user equipment, the pilot signal is required to perform data demodulation, and therefore, in this embodiment of the present invention, the data channel between the network side device and the user equipment is detected. Only when it is detected that data needs to be sent, the first pilot signal that is capable of meeting data demodulation is sent, so that a power overhead is saved when no data needs to be sent.

Optionally, the network side device in this embodiment of the present invention further includes:
a second sending unit 703, configured to send a second pilot signal to the user equipment, where the second pilot signal is used for channel status measurement.

The first sending unit 702 is further configured to send the first pilot signal to the user equipment by using first power, where the first power meets a functional requirement on the data demodulation, and specifically, the first power may be -16 dB to -10 dB.

The second sending unit 703 is further configured to send the second pilot signal to the user equipment by using second power, where the second power is lower than the first power.

Optionally, the first sending unit 702 in this embodiment of the present invention further includes:
a first sending module 7021, configured to send the first pilot signal to the user equipment in a code division multiplexing manner;
a second sending module 7022, configured to send the first pilot signal to the user equipment in a time division multiplexing manner;
a third sending module 7023, configured to send, on a dedicated pilot channel, the first pilot signal to the user equipment; and
a fourth sending module 7024, configured to send, on a data channel, the first pilot signal to the user equipment.

The following describes operation of each unit in this embodiment of the present invention:

The detecting unit 701 detects whether data needs to be sent on the data channel, and if yes, step 102 is executed. Specifically, when the network side device receives an instruction of sending data to the user equipment, it can be determined that data needs to be sent on the data channel.

The first sending unit 702 sends the first pilot signal to the user equipment, where the first pilot signal is used by the user equipment to demodulate data sent by the network side device. Specifically, the first pilot signal may be sent by using the first power, where a range of the first power may be -16 dB to -10 dB.

Specifically, the first pilot signal is added on the data channel, and uses a same transmit manner as data. If the data is sent in a single antenna manner, the pilot is sent in the single antenna manner, and precoding weighting is not performed. If the data is sent in a multi-antenna manner, the pilot is sent in the multi-antenna manner, and precoding weighting is performed. The number of sent first pilot signals is the same as the number of data streams.

Optionally, for a transmit manner of the second pilot signal, refer to an existing CPICH. The second pilot signal is a pre-designed bit sequence; a new orthogonal variable spreading factor (OVSF, Orthogonal Variable Spreading Factor) is used to perform spectrum spreading, the spreading factor may be SF256, SF128 or SF64; or an orthogonal signature sequence is used for sending. The number of sent second pilot signals is the same as the number of antennas. For example, if sending is performed in the single antenna manner, only one second pilot signal is sent, and if sending is performed in the multi-antenna manner, a number of second pilot signals are sent, where the number is the same as the number of transmit antennas.

Optionally, the first sending unit 702 may use the first sending module 7021 to send the first pilot signal to the user equipment in the code division multiplexing manner, or may use the second sending module 7022 to send the first pilot signal to the user equipment in the time division multiplexing manner. Specifically, when data is sent in a multi-antenna manner, the network side device sends, in a fixed time period within a transmit timeslot, the first pilot signal corresponding to the transmit timeslot by using the first power, where duration of the fixed time period is shorter than that of the transmit timeslot. Refer to FIG. 5 for a schematic sending diagram. For example, one transmit timeslot is 0.5 seconds, the fixed time period may be set as first 0.1 seconds of the timeslot, and the network side device sends, within the first 0.1 seconds, a first pilot signal corresponding to the timeslot; different first pilot signals may be sent in different intervals in a same timeslot, for example, a first pilot signal of a first user is sent within first 0.1 seconds of a transmit timeslot, and a first pilot signal of a second user is sent within second 0.1 seconds of the same timeslot; and as shown in FIG 5, "first pilot signal timeslot" indicated by shaded parts indicates first pilot signals sent to a same user. A downstream user equipment distinguishes different first pilot signals by performing reception within different intervals. When data transmission is performed on a network side, usable orthogonal code resources are limited, and using of time division multiplexing may save the orthogonal code resources.

Optionally, the first sending unit 702 may use the third sending module 7023 to send, on the dedicated pilot channel, the first pilot signal to the user equipment, or may use the fourth sending module 7024 to send, on the data channel, the first pilot signal to the user equipment. Specifically, the first pilot signal is added on the data channel, and uses a same transmit manner as data. If the data is sent in a single antenna manner, the pilot is sent in the single antenna manner, and precoding weighting is not performed. If the data is sent in a multi-antenna manner, the pilot is sent in the multi-antenna manner, and precoding weighting is performed. The number of sent first pilot signals is the same as the number of data streams. The network side device sends, in a fixed time period within a transmit timeslot of the data channel, the first pilot signal corresponding to the transmit timeslot by using the first power, where duration of the fixed time period is shorter than that of the transmit timeslot. Referring to FIG. 6 for a schematic sending diagram, when the network side sends a data signal, the first pilot signal may be sent by being added in a fixed time period in the transmit timeslot of the data channel.

The second sending unit 703 sends the second pilot signal to the user equipment, where the second pilot signal is used for the channel status measurement, the second power is lower than the first power, and the second power meets the functional requirement on the channel status measurement performed by the user equipment. Specifically, the channel status measurement may include CQI measurement and/or precoding indicator (PCI, Precoding Control Indication) measurement. Optionally, a range of the second power may be -25 dB to -10 dB.

The second pilot signal is used to measure a channel status to maintain a regular data transmission channel between the network side device and the user equipment, so that the second pilot signal may be sent continuously; optionally, in a scenario in which a signal environment is stable, the second pilot signal may be sent periodically, that is, the second pilot signal is sent every preset duration by using the second power.

In this embodiment of the present invention, pilot signals are classified into first pilot signals having higher transmit power and second pilot signals having lower transmit power; and the first pilot signal is used for data demodulation, and the second pilot signal is used for channel status measurement and mobility measurement, thereby improving effective utilization of the pilot signal.

In this embodiment of the present invention, the second pilot signal used for the channel status measurement is sent by using second power (lower than first power) independently, so that a power overhead of pilot signal sending is further reduced.

An embodiment of the present invention further provides a computer storage medium, where the computer storage medium may store a program. When the program is run, some or all of the steps of the pilot signal sending method recorded in the foregoing method embodiments are performed.

Referring to FIG.8, an embodiment of the present invention further provides a network side device, which may include:
an input apparatus 801, an output apparatus 802, a memory 803, and a processor 804 (the number of processors in the network side device may be one or multiple, and in an example used in FIG. 8, there is one processor). In some embodiments of the present invention, the input apparatus 801, output apparatus 802, memory 803, and processor 804 may be connected by using a bus or by using other means. As an example in FIG. 8, connection is implemented by using a bus.

The processor 804 executes the following steps:
detect whether data needs to be sent on a data channel, and if yes, send a first pilot signal to a user equipment, where specifically, when a network side device receives an instruction of sending data to the user equipment, it can be determined that data needs to be sent on the data channel; and send the first pilot signal to the user equipment, where the first pilot signal is used by the user equipment to demodulate data sent by a network side device.

Only when data needs to be transmitted between the network side device and the user equipment, the pilot signal is required to perform data demodulation, and therefore, in this embodiment of the present invention, the data channel between the network side device and the user equipment is detected. Only when it is detected that data needs to be sent, the first pilot signal that is capable of meeting data demodulation is sent, so that a power overhead is saved when no data needs to be sent.

Optionally, the network side device may further send a second pilot signal to the user equipment.

Information stored by the memory 803 includes:
The first pilot signal is used by the user equipment to demodulate the data sent by the network side device.

The second pilot signal is used for channel status measurement.

Optionally, the first pilot signal may be sent by using first power, where a range of the first power may be -16 dB to -10 dB. The second pilot signal may be sent by using second power, where the second power is lower than the first power, and the second power meets a functional requirement on the channel status measurement performed by the user equipment.

Specifically, the channel status measurement may include CQI measurement and/or precoding indicator (PCI, Precoding Control Indication) measurement. A range of the second power may be -25 dB to -10 dB.

In other embodiments of the present invention, information stored by the memory 803 is:

For a transmit manner of the second pilot signal, refer to an existing CPICH, the second pilot signal is a pre-designed bit sequence; a new orthogonal variable spreading factor (OVSF, Orthogonal Variable Spreading Factor) is used to perform spectrum spreading, the spreading factor may be SF256, SF128 or SF64; or an orthogonal signature sequence is used for sending. The number of sent second pilot signals is the same as the number of antennas. For example, if sending is performed in the single antenna manner, only one second pilot signal is sent, and if sending is performed in the multi-antenna manner, a number of second pilot signals are sent, where the number is the same as the number of transmit antennas.

In other embodiments of the present invention, the processor 804 may further execute the following steps:

The network side device sends different first pilot signals in a time division multiplexing manner by using first power.

When it is detected that data is sent in a single antenna manner, precoding weighting is not performed on the first pilot signal, and the first pilot signal uses code division multiplexing as a physical channel uses in the prior art (as shown in FIG. 3). The number of sent first pilot signals is consistent with the number of antennas that send the data.

When it is detected that data is sent in a multi-antenna manner, precoding weighting is performed on the first pilot signal, and performing the precoding weighting on the first pilot signal may help the downstream user equipment measure a signal to noise ratio gain. Specifically, the first pilot signal is sent for each sent data stream, that is, the number of sent first pilot signals is the same as the number of data streams. The data streams are two data sources on which orthogonal multiplexing is performed by means of the precoding weighting, where a data stream is corresponding to a data block. Optionally, different first pilot signals may be sent on a dedicated first pilot channel in a code division multiplexing manner by using the first power, and refer to FIG. 3, in which a box represents a timeslot. Using of the code division multiplexing manner may ensure data continuity, and improve measurement precision.

Specifically, the first pilot signal is added on the data channel, and uses a same transmit manner as data. If the data is sent in a single antenna manner, the pilot is sent in the single antenna manner, and precoding weighting is not performed. If the data is sent in a multi-antenna manner, the pilot is sent in the multi-antenna manner, and precoding weighting is performed. The number of sent first pilot signals is the same as the number of data streams.

Optionally, for a transmit manner of the second pilot signal, refer to an existing CPICH. The second pilot signal is a pre-designed bit sequence; a new orthogonal variable spreading factor (OVSF, Orthogonal Variable Spreading Factor) is used to perform spectrum spreading, the spreading factor may be SF256, SF128 or SF64; or an orthogonal signature sequence is used for sending. The number of sent second pilot signals is the same as the number of antennas. For example, if sending is performed in the single antenna manner, only one second pilot signal is sent, and if sending is performed in the multi-antenna manner, a number of second pilot signals are sent, where the number is the same as the number of transmit antennas.

Specifically, when data is sent in a multi-antenna manner, the network side device sends, in a fixed time period within a transmit timeslot, the first pilot signal corresponding to the transmit timeslot by using the first power, where duration of the fixed time period is shorter than that of the transmit timeslot. Refer to FIG 5 for a schematic sending diagram. For example, one transmit timeslot is 0.5 seconds, the fixed time period may be set as first 0.1 seconds of the timeslot, and the network side device sends, within the first 0.1 seconds, a first pilot signal corresponding to the timeslot; different first pilot signals may be sent in different intervals in a same timeslot, for example, a first pilot signal of a first user is sent within first 0.1 seconds of a transmit timeslot, and a first pilot signal of a second user is sent within second 0.1 seconds of the same timeslot; and as shown in FIG 5, "first pilot signal timeslot" indicated by shaded parts indicates first pilot signals sent to a same user. A downstream user equipment distinguishes different first pilot signals by performing reception within different intervals. When data transmission is performed on a network side, usable orthogonal code resources are limited, and using of time division multiplexing may save the orthogonal code resources.

Optionally, to further save a network side resource, the network side device may further send the first pilot signal on the data channel by using the first power (applicable to a situation in which data is sent in a single antenna manner or in a multi-antenna manner).

Specifically, the first pilot signal is added on the data channel, and uses a same transmit manner as data. If the data is sent in a single antenna manner, the pilot is sent in the single antenna manner, and precoding weighting is not performed. If the data is sent in a multi-antenna manner, the pilot is sent in the multi-antenna manner, and precoding weighting is performed. The number of sent first pilot signals is the same as the number of data streams. The network side device sends, in a fixed time period within a transmit timeslot of the data channel, the first pilot signal corresponding to the transmit timeslot by using the first power, where duration of the fixed time period is shorter than that of the transmit timeslot. Referring to FIG. 6 for a schematic sending diagram, when the network side sends a data signal, the first pilot signal may be sent by being added in a fixed time period in the transmit timeslot of the data channel.

In this embodiment of the present invention, pilot signals are classified into first pilot signals having higher transmit power and second pilot signals having lower transmit power; and the first pilot signal is used for data demodulation, and the second pilot signal is used for channel status measurement and mobility measurement, thereby improving an effective utilization rate of the pilot signal.

In this embodiment of the present invention, the second pilot signal used for the channel status measurement is sent by using second power (lower than first power) independently, so that a power overhead of pilot signal sending is further reduced.

The forgoing embodiments of the present invention may be applied to a GSM, a UMTS, a narrowband communications system (for example, S_UMTS), a Hetnet or another type of communications system, and no details are repeated herein.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A pilot signal sending method, comprising:
sending a first pilot signal to a user equipment when it is detected that data needs to be sent on a data channel, wherein the first pilot signal is used by the user equipment to demodulate data sent by a network side device.

2. The method according to claim 1, wherein the method further comprises:
sending a second pilot signal to the user equipment, wherein the second pilot signal is used for channel status measurement.

3. The method according to claim 2, wherein:
the sending a first pilot signal to a user equipment comprises:
sending the first pilot signal to the user equipment by using first power, wherein the first power meets a functional requirement on data demodulation; and
the sending a second pilot signal to the user equipment comprises:
sending the second pilot signal to the user equipment by using second power, wherein the second power is lower than the first power.

4. The method according to claim 3, wherein the second pilot signal is further used for mobility measurement of the user equipment.

5. The method according to claim 3, wherein the sending the second pilot signal to the user equipment by using second power comprises:
sending the second pilot signal to the user equipment every preset duration by using the second power.

6. The method according to any one of claims 1 to 5, wherein, when the data on the data channel is sent in a multi-antenna manner, the sending a first pilot signal to the user equipment comprises:
sending the first pilot signal to the user equipment in a code division multiplexing manner; or
sending the first pilot signal to the user equipment in a time division multiplexing manner.

7. The method according to claim 6, wherein when the sending a first pilot signal to a user equipment is sending the first pilot signal to the user equipment in a time division multiplexing manner, the sending the first pilot signal to the user equipment in a time division multiplexing manner comprises:
sending, in a fixed time period within a transmit timeslot, the first pilot signal corresponding to the transmit timeslot to the user equipment, wherein duration of the fixed time period is shorter than that of the transmit timeslot.

8. The method according to any one of claims I to 5, wherein the sending a first pilot signal to a user equipment comprises:
sending, on a dedicated pilot channel, the first pilot signal to the user equipment; or
sending, on a data channel, the first pilot signal to the user equipment.

9. The method according to claim 8, wherein when the sending a first pilot signal to a user equipment is sending, on a data channel, the first pilot signal to the user equipment, the sending, on a data channel, the first pilot signal to the user equipment comprises:
sending, in a fixed time period within a transmit timeslot of the data channel, the first pilot signal corresponding to the transmit timeslot to the user equipment, wherein duration of the fixed time period is shorter than that of the transmit timeslot.

10. The method according to claim 1, before the sending a first pilot signal to a user equipment, comprising:
when it is detected that data on the data channel is sent in a multi-antenna manner, skipping performing precoding weighting on the first pilot signal.

11. The method according to claim 2, wherein when the network side device has multiple ports, each of the ports can be configured to send the first pilot signal and the second pilot signal.

12. A network side device, comprising:
a detecting unit, configured to detect whether data needs to be sent on a data channel; and
a first sending unit, configured to send a first pilot signal to a user equipment when it is detected that data needs to be sent on the data channel, wherein the first pilot signal is used by the user equipment to demodulate data sent by the network side device.

13. The network side device according to claim 12, wherein the network side device further comprises:
a second sending unit, configured to send a second pilot signal to the user equipment, wherein the second pilot signal is used for channel status measurement.

14. The network side device according to claim 13, wherein the first sending unit is further configured to send the first pilot signal to the user equipment by using first power, and the first power meets a functional requirement on data demodulation; and
the second sending unit is further configured to send the second pilot signal to the user equipment by using second power, wherein the second power is lower than the first power.

15. The network side device according to claim 12, wherein the first sending unit comprises:
a first sending module, configured to send the first pilot signal to the user equipment in a code division multiplexing manner; and
a second sending module, configured to send the first pilot signal to the user equipment in a time division multiplexing manner.

16. The network side device according to claim 12, wherein the first sending unit comprises:
a third sending module, configured to send, on a dedicated pilot channel, the first pilot signal to the user equipment; and
a fourth sending module, configured to send, on a data channel, the first pilot signal to the user equipment.

17. A computer storage medium, wherein:
the computer storage medium stores a program, and when the program is run, the steps according to any one of claims 1 to 11 are performed.

18. A network side device, comprising:
an input apparatus, an output apparatus, a memory, and a processor; wherein
the processor is configured to execute the following steps:
send a first pilot signal to a user equipment when it is detected that data needs to be sent on a data channel, wherein the first pilot signal is used by the user equipment to demodulate data sent by the network side device.
